# EUROPEAN PATENT APPLICATION

(11) **EP 4 818 925 A1**
(43) Date of publication of application: **07.10.2026**
(21) Application number: 26170299.7
(22) Date of filing: 01.04.2026
(51) Int. Cl.: G06F 16/2455, G06F 16/28

(54) **ATTRIBUTE-BASED PROBABILISTIC FILTER CONFIGURATION FOR KEY-VALUE LOOKUP HANDLING**

(30) Priority: 02.04.2025 US 202519098824
(71) Applicant: VMware LLC, Palo Alto, CA 94304 (US)
(72) Inventor: Yu, Heeyeol, San Jose, 95118 (US)
(74) Representative: Dilg, Haeusler, Schindelmann Patentanwaltsgesellschaft mbH

(57) **Abstract**

Example methods and systems for attribute-based probabilistic filter configuration for key-value lookup handling are described. In one example, a computer system may maintain a first probabilistic filter that represents a first set of keys for handling first key-value lookups during a first time period. The computer system may generate lookup attribute information to track one or more attributes associated with the first key-value lookups during the first time period. Based on the lookup attribute information, the computer system may select a second set of keys. The computer system may configure the first probabilistic filter or a second probabilistic filter to represent the selected second set of keys for handling second key-value lookups during a second time period.

## Description

### BACKGROUND

Key-value lookup handling is an approach for retrieving data (i.e., value) associated with a key from a key-value datastore. In practice, probabilistic filters may enhance key-value lookups by providing a relatively efficient way to check the presence of elements in a set. One example of a probabilistic filter is a Bloom filter, which uses an array of M bits that are written into by K different hash functions. For example, in the networking domain, probabilistic filters may be maintained in a fast memory cache to keep track of data flows that are processed by a network element. For a packet associated with a flow, the network element may determine a key associated with the packet and perform a lookup to retrieve a value associated with the key. The value may specify action(s) associated with packet routing, distributed firewall, load balancing for layer-3, layer-4, or layer-7 applications, etc. Beyond networking, key-value lookups may be used in other applications, such as web caching services, search query handling, etc. In practice, it is desirable to improve the performance of key-value lookup handling.

### SUMMARY

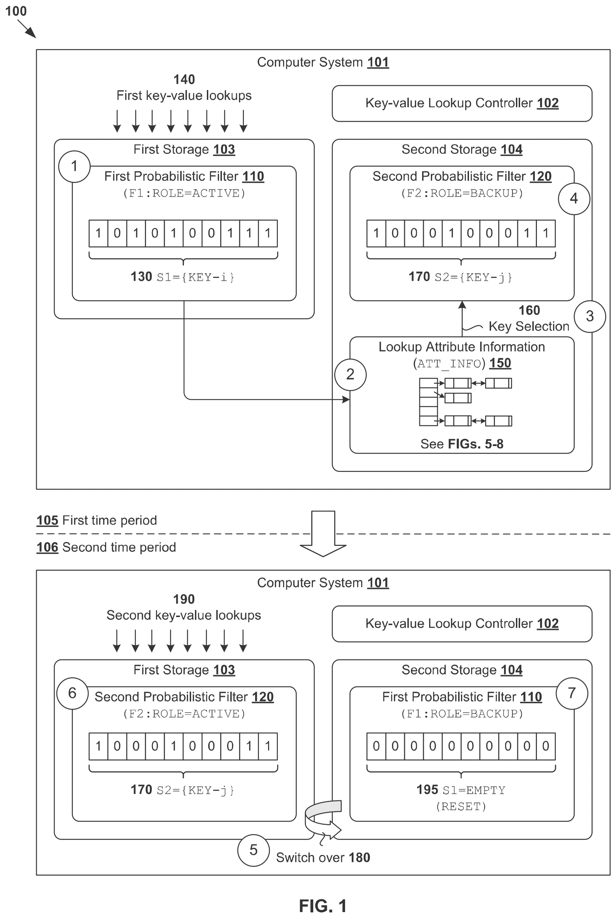

According to examples of the present disclosure, attribute-based probabilistic filter configuration may be performed based on lookup attribute information to improve the performance of key-value lookup handling. One example may involve a computer system maintaining a first probabilistic filter that represents a first set of keys for handling first key-value lookups during a first time period (see 110, 130-140 and 105 in FIG. 1). The computer system may generate lookup attribute information (see 150 in FIG. 1) to track one or more attributes associated with the first key-value lookups. As will be described further below, the lookup attribute information may be generated to track any suitable attribute(s), such as a frequency attribute (e.g., tracking how often keys are used to identify frequently used keys), a recency attribute (e.g., tracking how recently keys are used to identify recently used keys), any combination thereof, etc.

Based on the lookup attribute information, the computer system may select a second set of keys (see 160 in FIG. 1). The computer system may configure the first probabilistic filter or a second probabilistic filter to represent the second set of keys. This way, the second set of keys may be used for handling second key-value lookups during a second time period that occurs after the first time period (see 120, 170-190 in FIG. 1). Examples of the present disclosure may be implemented to improve the time and memory efficiency associated with key management and probabilistic filter configuration, compared to conventional approaches that rely on a random uniform distribution.

Examples of the present disclosure may further include a computer system, which comprises a processor and a non-transitory computer-readable medium having stored thereon instructions that, when executed by the processor, cause the processor to perform aspect(s) of the method(s) described herein. Another aspect may include a non-transitory computer-readable storage medium that includes a set of instructions which, in response to execution by a processor or a computer, cause the processor or the computer to perform aspect(s) of the method(s) described herein. Yet another aspect may include a computer program comprising instructions which, when executed by a processor or a computer system, cause the processor or the computer system to carry out aspect(s) of the method(s) described herein.

### BRIEF DESCRIPTION OF DRAWINGS

FIG. 1 is a schematic diagram illustrating an example of key-value lookup handling with attribute-based probabilistic filter configuration.
FIG. 2 is a flowchart of an example process for a computer system to perform key-value lookup handling with attribute-based probabilistic filter configuration.
FIG. 3 is a flowchart of an example detailed process for a computer system to perform key-value lookup handling with attribute-based probabilistic filter configuration.
FIG. 4 is a flowchart of an example detailed process for a computer system to generate lookup attribute information and perform attribute-based probabilistic filter configuration based on the lookup attribute information.
FIG. 5 is a schematic diagram illustrating a first example of lookup attribute information for tracking a frequency attribute.
FIG. 6 is a schematic diagram illustrating updated lookup attribute information compared to the first example in FIG. 5.
FIG. 7 is a schematic diagram illustrating a second example of lookup attribute information for tracking a recency attribute.
FIG. 8 is a schematic diagram illustrating updated lookup attribute information compared to the second example in FIG. 7.
FIG. 9A is a schematic diagram illustrating a first example computer system to perform key-value handling with attribute-based probabilistic filter configuration.
FIG. 9B is a schematic diagram illustrating a second example computer system to perform key-value handling with attribute-based probabilistic filter configuration.
FIG. 9C is a schematic diagram illustrating a third example computer system to perform key-value handling with attribute-based probabilistic filter configuration.
FIG. 10 is a schematic diagram illustrating an example software-defined networking (SDN) environment in which a computer system may be deployed to perform key-value lookup handling.

### DETAILED DESCRIPTION

In the following detailed description, reference is made to the accompanying drawings, which form a part hereof. In the drawings, similar symbols typically identify similar components, unless context dictates otherwise. The illustrative embodiments described in the detailed description, drawings, and claims are not meant to be limiting. Other embodiments may be utilized, and other changes may be made, without departing from the spirit or scope of the subject matter presented here. It will be readily understood that the aspects of the present disclosure, as generally described herein, and illustrated in the drawings, may be arranged, substituted, combined, and designed in a wide variety of different configurations, all of which are explicitly contemplated herein.

Although the terms "first" and "second" are used to describe various elements, these elements should not be limited by these terms. These terms are used to distinguish one element from another. For example, a first element may be referred to as a second element, and vice versa. As used herein, the phrase "at least one of" preceding a series of items, with the term "and" or "or" to separate any of the items, modifies the list as a whole, rather than each member of the list (i.e., each item). The phrase "at least one of" does not require selection of at least one of each item listed; rather, the phrase allows a meaning that includes at least one of any one of the items, and/or at least one of any combination of the items. By way of example, the phrases "at least one of A, B, and C" or "at least one of A, B, or C" each refer to only A, only B, or only C; and/or any combination of A, B, and C. In instances where it is intended that a selection be of "at least one of each of A, B, and C," or alternatively, "at least one of A, at least one of B, and at least one of C," it is expressly described as such.

### Overview

FIG. 1 is a schematic diagram illustrating an example (see 100) of key-value lookup handling with attribute-based probabilistic filter configuration. In this example, a computer system (see 101) may be configured to handle key-value lookup handling using one or more probabilistic filters. As used herein, the term "probabilistic filter" or "probabilistic membership filter" may refer generally to any suitable probabilistic data structure for testing or determining whether an element (e.g., a key) is a member of a set, with a certain probability of error. The term "key" may refer generally to an identifier that is mappable to an associated value during a key-value lookup. The term "value" may refer generally to any suitable data that is associated with a particular key. Examples of the present disclosure may be implemented using any suitable probabilistic data structures, such as Bloom filters, Cuckoo filters, Ribbon filters, Xor filters, quotient filters, etc.

### (a) Probabilistic filters

Referring first to the example in FIG. 1, two probabilistic filters 110-120 may be configured on computer system 101. A first probabilistic filter may be denoted as "F1" (see 110) and a second probabilistic filter as "F2" (see 120). Depending on the desired implementation, the probabilistic filters may be stored on different storage systems. For example, F1 110 may be stored on first storage system 103 representing a first memory tier/architecture, such as on-chip or cache memory that is accessible by a processor on computer system 101. F2 120 may be stored on second storage system 104 representing a second memory tier/architecture, such as main memory on computer system 101. Cache memory is designed to provide fast access to F1 110 during key-value lookups, reducing the need to access the slower main memory. Although not shown in FIG. 1, computer system 101 may access any additional memory tier/architecture, such as a database storing state information, etc.

During a first time period (see 105), F1 110 may be configured to represent a first set of keys (see 130) denoted as S1 = {KEY-*i*} for handling first key-value lookups (see 140), where *i* = 1, ..., *N.* For example, using *N* = 4 for simplicity, F1 110 may be encoded with bits or filter values to represent S1 130, which includes a first key = KEY-1, a second key = KEY-2, a third key = KEY-3 and a fourth key = KEY-4. In practice, F1 110 may be a Bloom filter associated with a bit array of multiple (*M*) bits or filter values to represent S1 130.

When encoding a key into F1 110, multiple (*K*) hash functions may be applied to generate *K* indices identifying respective *K* locations in the bit array, and the bits at these indices are set to 1. For example, consider *M* = 10 with all bits initially set to zero at respective indices 0 to 9, i.e., [0, 0, 0, 0, 0, 0, 0, 0, 0, 0]. Using *K* = 3 hash functions, indices [0, 4, 9] may be calculated for KEY-1, [4, 7, 9] for KEY-2, [0, 8, 9] for KEY-3 and [0, 2, 7] for KEY-4. To add KEY-1 into F1 110, the bits at indices [0, 4, 9] are set to 1. To add or encode KEY-2, the bits at indices [4, 7, 9] may be set to 1. The encoding process using the *K* hash functions may be repeated for other keys such as KEY-3 and KEY-4, resulting in F1 = [1, 0, 1, 0, 1, 0, 0, 1, 1, 1] in FIG. 1.

During key-value lookup handling, F1 110 may be used for approximate membership queries. The same hash functions may be used to determine whether a key is a member of S1 130. Since the bits at indices [0, 4, 9] are set to 1 in F1 110, it may be determined that KEY-1 is a member of first set 130. Similarly, it may be determined that KEY-2 is a member because the bits at indices [4, 7, 9] are also set to 1. However, if any bit at those indices is set to zero (i.e., not set), it may be determined that the corresponding key is not a member of S1 130, such as KEY-5 associated with indices [3, 4, 5].

For a Bloom filter, there is a possibility of false positives but generally no false negatives. This means that if the Bloom filter indicates that a key is in a set, there is a small chance that the key might not actually be in the set (i.e., false positive). To reduce the likelihood of bit conflicts, a larger bit array may be used. Additionally, increasing the number of hash functions (*K*) may reduce the likelihood of bit conflicts in multiple indices or locations. Due to the reduced false positive in membership queries for a large-scale key set, Bloom filters may be stored in fast cache memory, where memory cost is relatively higher, while packet processing may be performed substantially faster.

### (b) Key selection

During the first time period (see 105), F1 110 may be assigned with role = ACTIVE and F2 120 with role = BACKUP. During a second time period (see 106), their roles may be switched or reversed such that the role of F2 120 switches to ACTIVE. In this case, at the start of second time period 106, F1 110 may be reset and assigned with role = BACKUP. By iteratively switching between two working filters, the BACKUP filter may replace the ACTIVE filter during second time period 106. Each time period may start by resetting the current ACTIVE filter before designating it as the BACKUP filter, as well as designating the current BACKUP filter as the new ACTIVE filter.

In practice, one challenge in key-value lookup handling using probabilistic filters involves selecting keys for and configuring F2 120 before its role transitions from BACKUP to ACTIVE during second time period 106. Conventionally, one approach is to configure backup F2 120 to represent a smaller set of keys sampled from S1 130 using a random uniform distribution, etc. One example is described in United States Patent Nos. 11,888,747 and 12,081,437, which disclose a backup filter storing "filter values for the flow associated with each Nth data message (e.g., 50^{th}, 100^{th}, 500^{th}, 1000^{th}, etc.)." A disadvantage of sampling using a random uniform distribution is that it may fail to effectively capture the desired keys, such as the most frequently or recently used keys. Since all keys in S1 130 may have a random uniform chance of being selected, the conventional approach may cause cache waste by storing less relevant keys (e.g., least frequently or recently used keys), thereby affecting the performance of key-value lookup handling.

### Attribute-based probabilistic filter configuration

According to examples of the present disclosure, attribute-based probabilistic filter configuration may be performed based on lookup attribute information to improve the performance of key-value lookup handling and. The term "attribute-based probabilistic filter configuration" may refer generally to a process of setting up a probabilistic filter to represent a set of keys, where the keys are selected based on lookup attribute information. The term "lookup attribute information" or "attribute information" may refer generally to information specifying attribute(s), characteristic(s), or statistics associated with keys used or accessed in key-value lookups. Any suitable attribute(s) may be tracked, such as a frequency attribute, a recency attribute, etc.

As will be described below, the lookup attribute information may be generated to track a frequency attribute (i.e., how often a key is used or accessed), a recency attribute (i.e., whether a key has been used or accessed recently), a combination thereof, etc. Using attribute-based probabilistic filter configuration, keys that are more relevant or likely to be used may be given a higher priority. In some embodiments, the lookup attribute information may be dynamically updated over time to serve as a deterministic cache of the most frequently or recently used keys. Examples of the present disclosure may be implemented to reduce the likelihood of selecting less relevant keys, thereby reducing cache waste, improving space and time efficiency associated with key management, and enhancing the performance of key-value lookup handling.

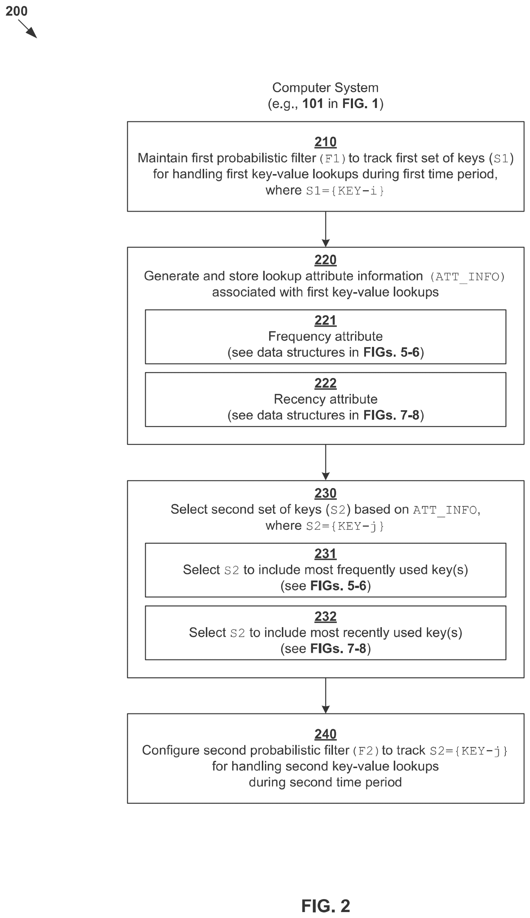

In more detail, FIG. 2 is a flowchart of an example process (see 200) for computer system 101 to perform key-value lookup handling with attribute-based probabilistic filter configuration. Example process 200 may include one or more operations, functions, or actions illustrated by one or more blocks, such as 210 to 240. Depending on the desired implementation, various blocks may be combined into fewer blocks, divided into additional blocks, and/or eliminated. Examples of the present disclosure may be implemented using any suitable "computer system," such as computer system 101 in FIG. 1. In practice, a computer system may be known as a "computing device," "host computer," "host device," "physical server," "transport node," "network forwarding element," "network element," etc. To implement examples of the present disclosure, computer system 101 may include any suitable software, hardware and/or firmware component(s) or module(s), which are represented generally using key-value lookup controller 102, etc.

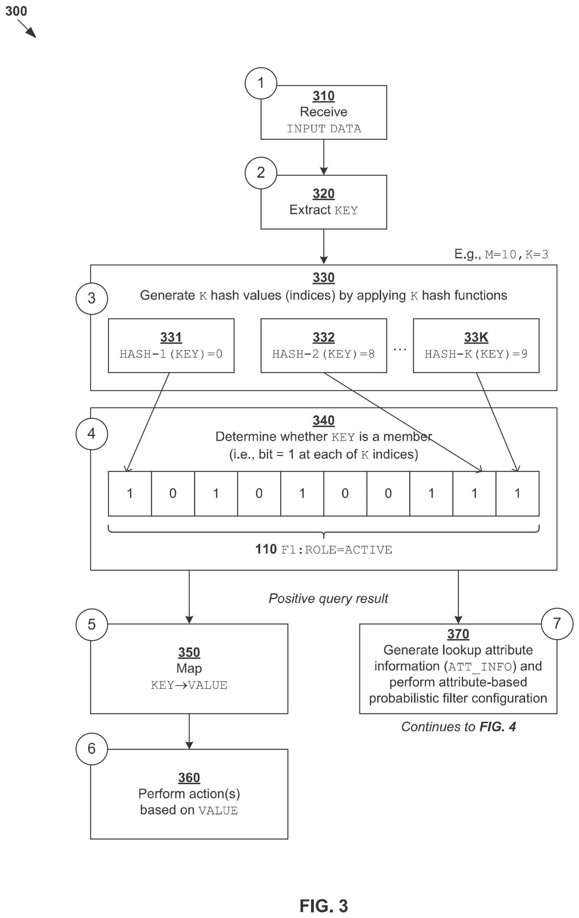

At 210 in FIG. 2, computer system 101 may maintain F1 110 ("first probabilistic filter") to represent S1 130 ("first set of keys") for handling first key-value lookups (see 140 in FIG. 1) during first time period 105. The first set of keys may be represented using S1 = {KEY-*i*}, where *i* = 1, ..., *N.* Here, the term "maintain" or "maintaining" may include a computer system performing any suitable operation(s) to keep a filter in an operational state, such as initializing the filter, updating the filter, etc. The term "represent" may refer generally to a probabilistic filter storing bits or filter values to keep track of a set of keys, instead of directly storing the keys. For example, F1 110 may be a bit array with length = *M* bits or filter values to represent S1 130 using *K* hash functions (e.g., *M* = 10 and *K* = 3 in FIG. 3).

At 220 in FIG. 2, computer system 101 may generate and store lookup attribute information (see 150 in FIG. 1) in one or more data structures. Lookup attribute information 150 may be generated to track one or more attributes associated with first key-value lookups 140. The term "generate" may refer generally to creating, maintaining and/or updating lookup attribute information over time. An example of an "attribute associated with first key-value lookups 140" may include an attribute related to key usage or access during first key-value lookups 140. A particular key used or accessed in a particular first key-value lookup may, but not necessarily, be a member of S1 130. In practice, lookup attribute information 150 may be generated to track any suitable attribute(s) of interest, such as a frequency attribute to track the most frequently used keys during first time period 105, recency attribute to track the most recently used keys during first time period 105, any combination thereof, etc. Any additional and/or alternative attribute(s) may be used.

Depending on the desired implementation, examples of the present disclosure may be implemented together with any suitable cache replacement policy (also known as cache replacement algorithm or cache algorithm) for managing a cache of information. When a cache is full, a cache replacement policy may be applied to discard entries in the cache to create space for new entries. Examples may include machine learning (ML)-based policies, Bélády's algorithm, and re-reference interval prediction (RRIP)-style policies. For example, ML-based policies may leverage predictive models trained on historical key access or usage patterns. Bélády's algorithm serves as an approach to cache replacement based on anticipated future memory access patterns. RRIP-style policies may be applied to prioritize retaining cache entries with relatively shorter re-reference intervals while evicting those with longer intervals. Any suitable data structures may be used to store lookup attribute information 150, such as hash tables, linked lists, doubly linked lists, skip lists, arrays or sorted arrays, graphs, tree-like data structures (e.g., binary search tree), etc.

At 230 in FIG. 2, based on lookup attribute information 150, computer system 101 may select a second set of keys (see 160 in FIG. 1). The second set of keys (see 170 in FIG. 1) may be denoted as S2 = {KEY-*j*}, where *j* = 1, ... , *L.* For example, a particular KEY-*j* that is selected for S2 170 may, but not necessarily, be a member of S1 130. As will be described further below, the number of keys (*L*) in S2 170 may depend on any suitable factor, such as cache size limit, etc. Depending on the desired implementation, block 230 may involve computer system 101 performing a search using lookup attribute information 150 to select S2 170. For example, a linear search with O(1) time complexity may be performed using lookup attribute information 150, which includes data structure(s) to store memory pointers to locate corresponding keys in doubly linked list(s).

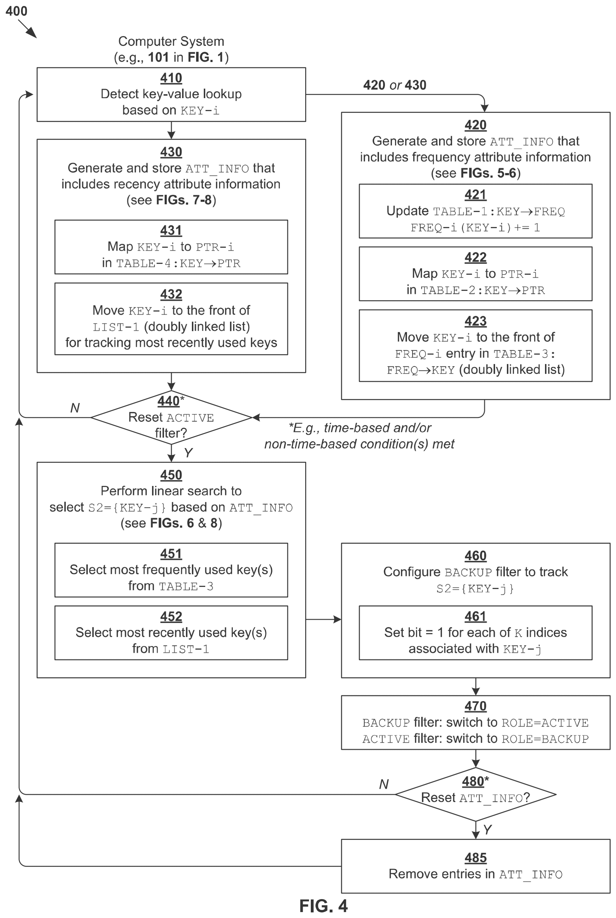

A first example will be explained using blocks 221 and 231 in FIG. 2. In this case, block 221 may involve computer system 101 generating lookup attribute information 150 to track a frequency attribute associated with key(s) in S1 130. The term "frequency attribute" may refer generally to how often a key is used or accessed during key-value lookups within a specific time period. To facilitate frequency-based probabilistic filter configuration, block 231 may involve computer system 101 selecting S2 170 to include the most frequently used keys during first time period 105 based on lookup attribute information 150. See detailed examples in FIGs. 4, 5-6.

A second example will be explained using blocks 222 and 232 in FIG. 2. In this case, block 222 may involve computer system 101 generating lookup attribute information 150 to track a recency attribute associated with key(s) in S1 130. The term "recency attribute" may refer generally to how recently a key is used or accessed during key-value lookups within a specific time period. To facilitate recency-based probabilistic filter configuration, block 232 may involve computer system 101 selecting S2 170 to include the most recently used keys during first time period 105 based on lookup attribute information 150. See detailed examples in FIGs. 4, 7-8.

At 240 in FIG. 2, computer system 101 may configure F2 120 ("second probabilistic filter") to represent S2 170 for handling second key-value lookups (see 190 in FIG. 1) during second time period 106 that occurs after first time period 105. The term "configure" may refer generally to setting bits or filter values associated with a probabilistic filter to represent a specific set of keys, such as by encoding a key using hash functions and initializing corresponding filter values in the probabilistic filter. After a switchover (see 180 in FIG. 1), F2 120 may be stored in first storage 103 (e.g., cache memory) and have its role transitioned from BACKUP to ACTIVE during second time period 106. In this case, F1 110 may be reset such that all bit values = 0 (see 195 in FIG. 1), stored in second storage 104 (e.g., main memory), and have its role of F1 110 transitioned from ACTIVE to BACKUP.

Using examples of the present disclosure, lookup attribute information 150 may be generated and stored in data structures(s) to facilitate attribute-based probabilistic filter configuration. Examples of the present disclosure may be implemented to track and select the most relevant keys (e.g., most frequently used, most recently used, etc.) that are more likely to be used in the next time period. This way, the likelihood of cache waste may be reduced to improve the overall system performance. This should be contrasted against conventional approaches that select keys based on a random uniform distribution, leading to inefficient use of storage and computational resources. Although explained using the configuration of F2 120 for handling second key-value lookups 190 during second time period 106, it should be understood that block 240 in FIG. 2 may involve configuring F1 110 instead of F2 120 to handle those lookups 190. In this alternative embodiment, computer system 101 may maintain one probabilistic filter instead of two for key-value lookup handling.

### Example key-value lookup handling

FIG. 3 is a flowchart of an example detailed process (see 300) for computer system 101 to perform key-value lookup handling with attribute-based probabilistic filter configuration. Example process 300 may include one or more operations, functions, or actions illustrated by one or more blocks, such as 310 to 370. Depending on the desired implementation, various blocks may be combined into fewer blocks, divided into additional blocks, and/or eliminated. Example process 300 may be implemented by computer system 101 in FIG. 1, such as using key-value lookup controller 102 that is implemented using any suitable hardware/software/firmware, etc.

At 310-320 in FIG. 3, in response to receiving input data that triggers a key-value lookup, computer system 101 may extract a query key from the input data. The input data may be received from any suitable source (e.g., client system, source endpoint, etc.), such as an external system, a different component on computer system 101, etc. In one example, computer system 101 may be a hardware or software-implemented network element that is configured to provide packet forwarding services or networking services, such as switch, router, gateway, edge node, distributed firewall, etc. In this case, the input data may be in the form of a packet or data message associated with a flow from a source to a destination. The key may be extracted from header information of the packet, such as flow tuple information that includes a source Internet Protocol (IP) address, destination IP address, source port number, destination port number and protocol information. The header information may be layer-3, layer-4, and/or layer-7 header information.

At 330 in FIG. 3, computer system 101 may generate K hash values by applying K hash functions to the query key. Each hash value may represent an index to identify a location in F1 110, which is assigned with role = ACTIVE. At 340 in FIG. 3, computer system 101 may determine whether the query key is a member of S1 130 by checking whether the *K* bits associated with the respective K hash values are set (i.e., bit value = 1). For example, using F1 110 with *M =* 10 bits and *K =* 3 hash functions, query key = KEY-3 is associated with indices [0, 8, 9]. Since the bits at those indices are set in F1 110 = [1, 0, 1, 0, 1, 0, 0, 1, 1, 1] in FIG. 1, computer system 101 may determine that KEY-3 is a member (i.e., positive query result).

At 350-360 in FIG. 3, in response to the determination that the query key is a member of S1 130 (i.e., positive query result), computer system 101 may perform key-value lookup handling by mapping the query key to a value that is stored in any suitable state storage. The value may include state information associated with a packet flow, along with any suitable packet processing and/or forwarding action(s) to be performed.

Further, at 370 in FIG. 3, computer system 101 may generate and store lookup attribute information 150 according to examples of the present disclosure. By tracking attributes associated with various keys, lookup attribute information 150 may represent the usage/access history or statistics associated with those keys. Based on lookup attribute information 150, attribute-based probabilistic filter configuration may be performed according to examples of the present disclosure. Some examples will be explained using FIGs. 4-8 below.

### First example: frequency attribute information

FIG. 4 is a flowchart of an example detailed process (see 400) for computer system 101 to generate lookup attribute information and perform attribute-based probabilistic filter configuration based on the lookup attribute information. Example process 400 may include one or more operations, functions, or actions illustrated by one or more blocks, such as 410 to 485. Depending on the desired implementation, various blocks may be combined into fewer blocks, divided into additional blocks, and/or eliminated. Example process 400 may be implemented by computer system 101 in FIG. 1, such as using key-value lookup controller 102, etc.

### (a) Query result

At 410-420 in FIG. 4, in response to detecting a particular first key-value lookup based on a particular key (KEY-*i*) and KEY-*i* is a member of S1 = {KEY-*i*}, where *i* ∈ {1, ..., *N*}, computer system 101 may generate and store frequency attribute information in any suitable data structure(s). The term "frequency attribute information" may refer generally to lookup attribute information 150 that is generated to track a frequency attribute associated with keys used in key-value lookups.

Depending on the desired implementation, lookup attribute information 150 may be updated according to block 420 or 430 in FIG. 4 in response to a positive query result, i.e., the query key is a member of a target set. Due to the likelihood of false positives using probabilistic filters, computer system 101 may confirm whether the query key belongs to the target set by accessing an original database storing all keys in a third memory tier/architecture (not shown in FIG. 1 for simplicity). Since accessing the database might be quite slow and the target set may change dynamically, the relatively slow database access may be optional depending on the desired implementation.

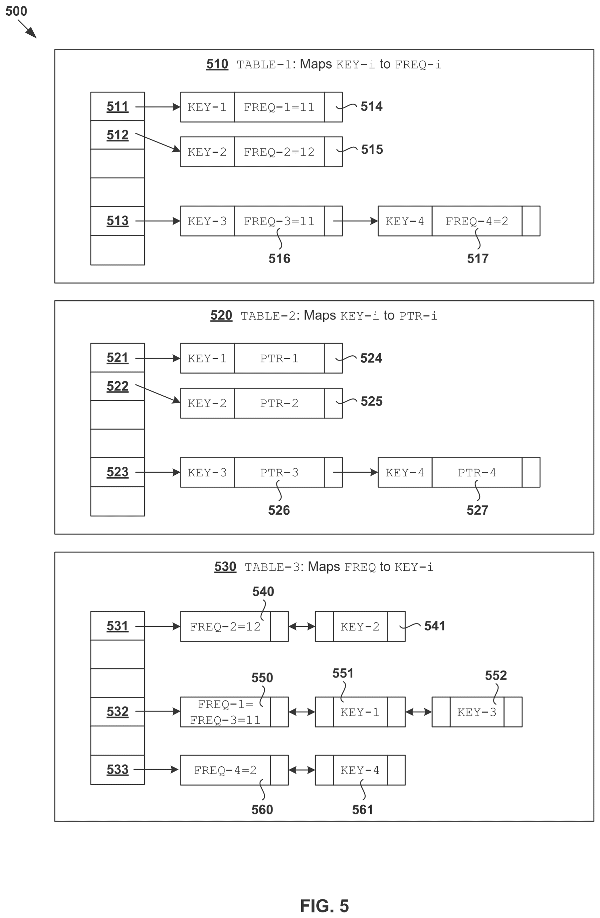

In one approach, if all members of a target set are stored in the main memory along with its associated lookup attribute information 150, new members may be added as required. For example, a new member may be created when a user defines a new network security rule to block a particular IP address (e.g., 1.1.1.1). Each new member key may be associated with frequency counter value = 0 in the examples in FIGs. 5-6 below. In another approach, only a limited number of keys among a target set may be stored due to main memory costs. In this case, the original database may be accessed to confirm whether a key belongs to the target set, which saves memory but results in slower confirmation. This trade-off between memory use and confirmation speed highlights the pros and cons of each approach. The appropriate approach may be implemented depending on the specific requirements and constraints of the system in use.

### (b) Example data structures

Some example data structures are shown in FIG. 5, which is a schematic diagram illustrating a first example (see 500) of lookup attribute information for tracking a frequency attribute. In this example, computer system 101 may generate and store frequency attribute information in multiple data structures in second storage 104 (e.g., main memory), such as a first data structure in the form of a key-to-frequency hash table (see TABLE-1 510), a second data structure in the form of a key-to-pointer hash table (see TABLE-2 520) and a third data structure in the form of a frequency-to-key hash table with doubly linked lists (see TABLE-3 530). These data structures will be discussed in turn below.

At 510 in FIG. 5, computer system 101 may maintain a key-to-frequency hash table (TABLE-1) to store mapping information that associates each KEY-*i* with its frequency counter value (FREQ-*i*). The frequency counter value tracks how many times KEY-*i* has been used or accessed within a time period. Each entry in TABLE-1 510 may be linked to a linked list to store all entries hashing to the same index. For example, KEY-1 may hash to a first entry (see 511), which is linked to a record storing a first mapping (KEY-1, FREQ-1 = 11). KEY-2 may hash to a second entry (see 512), which is linked to a record storing a second mapping (KEY-2, FREQ-2 = 12). Due to key collision, KEY-3 and KEY-4 may be hashed to the same third entry (see 513), which is linked to two records. One record stores a third mapping (KEY-3, FREQ-3 = 11), and the other stores a fourth mapping (KEY-4, FREQ-4 = 2). See also 514-517 in FIG. 5.

At 520 in FIG. 5, computer system 101 may maintain a key-to-pointer hash table (TABLE-2) to store mapping information that associates each KEY-*i* with a memory pointer (PTR-i). Each PTR-*i* may hold the address of a memory location for accessing a record associated with KEY-*i* in TABLE-3 530. Each entry in TABLE-2 520 may be linked to a linked list to store all entries hashing to the same index. For example, KEY-1 may hash to a first entry (see 521) that is linked to a record storing a first mapping (KEY-1, PTR-1). KEY-2 may hash to a second entry (see 522) that is linked to a record storing a second mapping (KEY-2, PTR-2). Again, due to key collision, KEY-3 and KEY-4 may be hashed to the same third entry (see 523), which is linked to two records. One record stores a third mapping (KEY-3, PTR-3), and the other stores a fourth mapping (KEY-4, PTR-4). See also 524-527 in FIG. 5.

At 530 in FIG. 5, computer system 101 may maintain a frequency-to-key hash table (TABLE-3) to store mapping information that associates (a) a particular frequency counter value with (b) key(s) associated with that value. Each entry in TABLE-3 530 may be linked to a doubly linked list to store all entries hashing to the same index. In practice, using a doubly linked list offers various advantages in data structures, particularly when integrated with a hash table. Unlike a singly linked list, a doubly linked list allows traversal in both forward and backward directions, providing greater flexibility in element access. Doubly linked lists also improve navigational and operational efficiency and streamline insertion and deletion operations, as each record maintains references to both its previous and next records, enabling direct access to either direction without requiring prior traversal.

According to examples of the present disclosure, doubly linked lists may be used to facilitate efficient record insertions and deletions as lookup attribute information 150 is updated. At 531 in FIG. 5, FREQ-2 hashes to a first entry in TABLE-3 530, which is linked to records mapping FREQ-2 = 12 to KEY-2; see 540-541. At 532 in FIG. 5, FREQ-1 and FREQ-3 hash to the same second entry (see 532) because FREQ-1 = FREQ-3 = 11. The second entry is linked to records that map (FREQ-1 = FREQ-3 = 11) to KEY-2 and KEY-3; see 550-552. At 533 in FIG. 5, FREQ-4 hashes to a third entry linked to records mapping FREQ-4 = 2 to KEY-4. See also 560-561 in FIG. 5.

### (b) Updated frequency attribute information

Blocks 421-423 in FIG. 4 may be performed to update frequency attribute information 510-530 in FIG. 5. At 421 in FIG. 4, in response to detecting a particular key-value lookup based on a particular KEY-*i*, computer system 101 may update TABLE-1 510 to associate KEY-*i* with an increased frequency counter value (i.e., FREQ-*i* = FREQ-*i* + 1). Next, at 422, computer system 101 may retrieve a memory pointer (PTR-i) associated with KEY-*i* from TABLE-2 520. This way, at 423, based on PTR-*i*, computer system 101 may update TABLE-3 530 to associate KEY-*i* with its increased frequency counter value, as well as to indicate KEY-*i* is the most recently used for that frequency counter value.

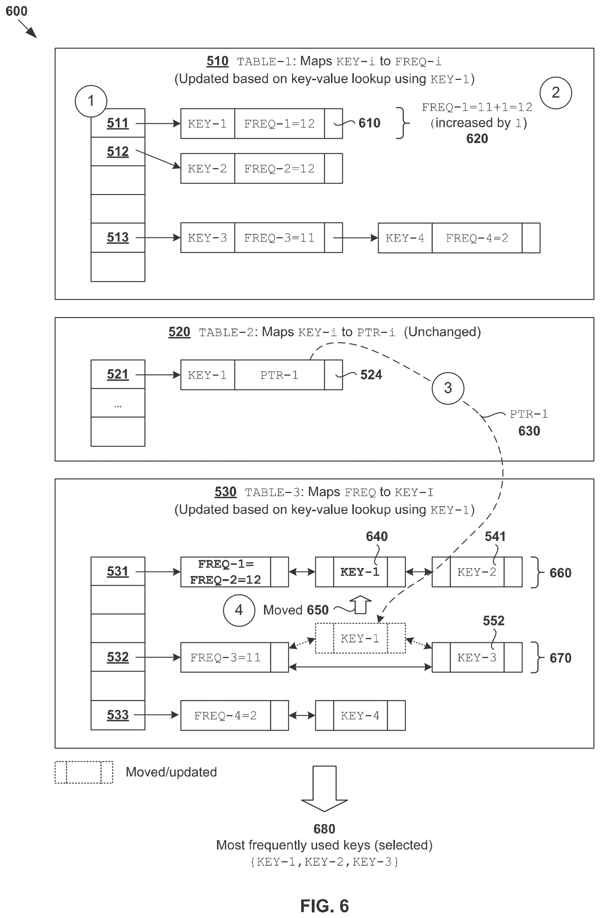

An example is shown in FIG. 6, which is a schematic diagram illustrating example updated lookup attribute information (see 600) compared to the first example in FIG. 5. In the example in FIG. 6, consider a key-value lookup based on query key = KEY-1. At 610-620 in FIG. 6, TABLE-1 510 may be updated to replace mapping (KEY-1, FREQ-1 = 11) with new mapping (KEY-1, FREQ-1 = 12), thereby incrementing its frequency counter value by 1. At 630 in FIG. 6, PTR-1 associated with KEY-1 may be retrieved from TABLE-2 520 based on KEY-1.

Using a memory location specified by PTR-1, a record (see 640 in FIG. 6) that associates KEY-1 with the frequency counter value = 11 may be identified from TABLE-3 530. Next, at 640-650 in FIG. 6, the record associated with KEY-1 may be moved from (a) a first doubly linked list (see 660) associated with the previous frequency counter value of 11 to (b) a second doubly linked list (see 670) associated with the incremented frequency counter value of 12.

Note that the record associated with KEY-1 may be added to the front of the second doubly linked list to indicate KEY-1 is the most recently used key for the increased frequency counter value. The position of KEY-2 (see 541 in FIG. 6) changes after KEY-1 replaces KEY-2 as the most recently used key for frequency counter value = 12. After TABLE-3 530 is updated, a record associated with FREQ-3 = 11 is linked with a doubly linked list that includes KEY-3 (see 552 in FIG. 6). By removing and adding keys between doubly linked lists, the latest frequency counter value associated with each key may be tracked. Further, by adding keys to the front of a doubly linked list in TABLE-3 530, the most recently used key or keys associated with a particular frequency counter value may be tracked.

### (c) Frequency-based key selection

Referring to FIG. 4 again, at 440-450, in response to determination to reset F1 110 assigned with role = ACTIVE and perform a switchover, computer system 101 may select S2 = {KEY-*j*}. Depending on the desired implementation, block 440 may involve determining whether a time-based condition and/or a non-time-based condition is satisfied prior to resetting F1 110. For example, a time-based condition may be satisfied when a certain amount of time has elapsed since the last filter reset. A non-time-based condition may be satisfied when, for example, a performance metric associated with key-value lookup handling meets or exceeds a configurable threshold.

At 451 in FIG. 4, based on updated frequency attribute information 510-530 in FIG. 6, computer system 101 may perform a linear search to select the most recently used keys during first time period 105. In the example in FIG. 6, the ordered set of keys (see 680) from most recently used to least recently used is {KEY-1, KEY-2, KEY-3, KEY-4}. In practice, any suitable selection criterion or criteria may be applied to select KEY-*j* for S2 170. In one example, based on the desired cache size for F2 120, a related number of keys may be selected, starting from the most recently used to the least recently used. In another example, KEY-*j* may be selected in response to the determination that its frequency counter value (FREQ-*j*) exceeds a configurable threshold (e.g., average or median value), starting from the most recently to the least recently used. For example, the selected keys may be S2 = {KEY-1, KEY-2, KEY-3}, i.e., a set of the most frequently used keys during first time period 105. See 680 in FIG. 6.

### (d) Frequency-based probabilistic filter configuration

At 460 in FIG. 4, computer system 101 may configure F2 120 to represent S2 = {KEY-*j*}. For example, at 461, each KEY-*j* may be encoded into F2 120 using *K* hash functions to calculate *K* hash values, which identify *K* array indices or locations in F2 120. For example, to encode KEY-1 into F2 120, the bits at indices [0, 4, 9] are set to 1. To encode KEY-2, the bits at indices [4, 7, 9] may be set to 1. To encode KEY-3, the bits at indices [0, 8, 9] are set to 1. This results in F2 = [1, 0, 0, 0, 1, 0, 0, 0, 1, 1] in the example in FIG. 1, where the filter length *M* = 10 bits and *K* = 3 hash functions.

At 470 in FIG. 4, computer system 101 may switch the roles of the filters by assigning F2 120 as the ACTIVE filter and F1 110 as the BACKUP filter. During second time period 106, F2 120 may be stored in first storage 103 (e.g., cache memory) for handling second key-value lookups (see 190 in FIG. 1). F1 110 may be reset (i.e., emptied) and stored in second storage 104 (e.g., main memory).

Although exemplified using S2 = {KEY-1, KEY-2, KEY-3} at 680 in FIG. 6, it should be noted that a new key (e.g., KEY-5), which does not belong to S1 130, may be selected either additionally or alternatively. In such cases, frequency attribute information 510-530 may track and identify KEY-5 as one of the most frequently used keys during first time period 105. This way, S2 170 may be configured to include new keys that have been more frequently used or accessed during first time period 105 compared to the existing keys in S1 130, thereby filtering out less relevant keys based on frequency. During second time period 106, blocks 410-460 in FIG. 4 may be repeated to generate/update lookup attribute information to track the most frequently used and/or most recently used keys based on second key-value lookups 190. The attribute information may then be used to select a third set of keys for a subsequent, third time period.

### Second example: recency attribute information

Alternatively or additionally, at 410 and 430 in FIG. 4, in response to detecting a key-value lookup based on KEY-*i*, computer system 101 may generate and store recency attribute information in any suitable data structure(s). The term "recency attribute information" may refer generally to lookup attribute information 150 that is generated to track a recency attribute associated with associated with keys used in key-value lookups. The recency attribute information may be used to identify the most recently used or accessed keys during first time period 105.

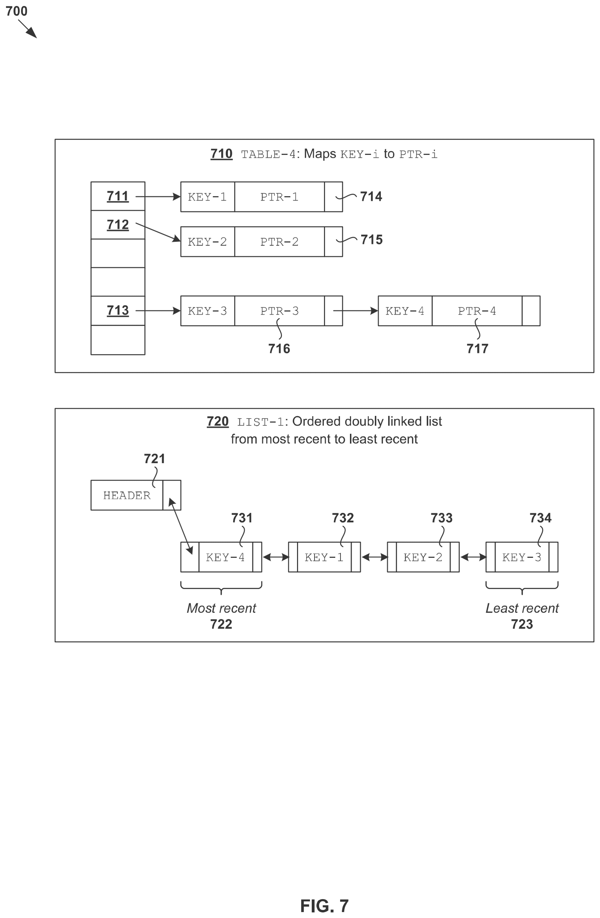

Some example data structures for storing recency attribute information are shown in FIG. 7, which is a schematic diagram illustrating a second example (see 700) of lookup attribute information for tracking a recency attribute. In this example, computer system 101 may generate and store recency attribute information in multiple data structures in second storage 104 (e.g., main memory), such as a key-to-pointer hash table (see TABLE-4 710) and a data structure in the form of an ordered doubly linked list (see LIST-1 720) that orders keys from most recently used to least recently used. These data structures will be discussed below.

### (a) Example data structures

At 710 in FIG. 7, computer system 101 may maintain a key-to-pointer hash table (TABLE-4) to store mapping information that associates each KEY-*i* to a memory pointer (PTR-*i*). Each PTR-*i* may hold the address of a memory location for accessing a record associated with KEY-*i* in a doubly linked list (see LIST-2 720). Each entry in TABLE-4 710 may be linked to a linked list to store all entries hashing to the same index. For example, KEY-1 may hash to a first entry (see 711), which is linked to a record storing a first mapping (KEY-1, PTR-1). KEY-2 may hash to a second entry (see 712), which is linked to a record storing a second mapping (KEY-2, PTR-2). Due to key collision, KEY-3 and KEY-4 may be hashed to the same third entry (see 713), which is linked to two records. One record stores a third mapping (KEY-3, PTR-3), and the other stores a fourth mapping (KEY-4, PTR-4). See example records 714-717 in FIG. 7.

At 720 in FIG. 7, computer system 101 may maintain a doubly linked list (LIST-1) to track an ordered set of keys. For example, LIST-1 720 may include a header node (see 721) that is linked to a chain of multiple records that are ordered from the most recently used to the least recently used (see 731-734). The first and frontmost record (see 722) indicates that KEY-4 is the most recently used key, followed by KEY-1 and KEY-2. The last record (see 734) of LIST-1 720 indicates that KEY-3 is the least recently used key. Each record has two pointers: a next pointer that points to the next record on the list and a previous pointer that points to the previous record or header. As discussed above, a doubly linked list allows traversal in both forward and backward directions, providing flexibility in accessing and updating the order of records as their recency attribute information is updated.

### (b) Updated recency attribute information

Blocks 431-432 in FIG. 4 may be performed to update recency attribute information. At 431 in FIG. 4, in response to detecting a key-value lookup based on KEY-*i*, computer system 101 may update TABLE-1 510 to increase its frequency counter value (FREQ-*i*) by one. Next, at 432, computer system 101 may retrieve a record specifying PTR-*i* from TABLE-4 710 based on KEY-*i*. This way, at 433, based on PTR-*i*, computer system 101 may update LIST-1 720 that tracks the order of key usage from most recently used to least recently used. In particular, LIST-1 720 may be updated to indicate that KEY-*i* is currently the most recently used key.

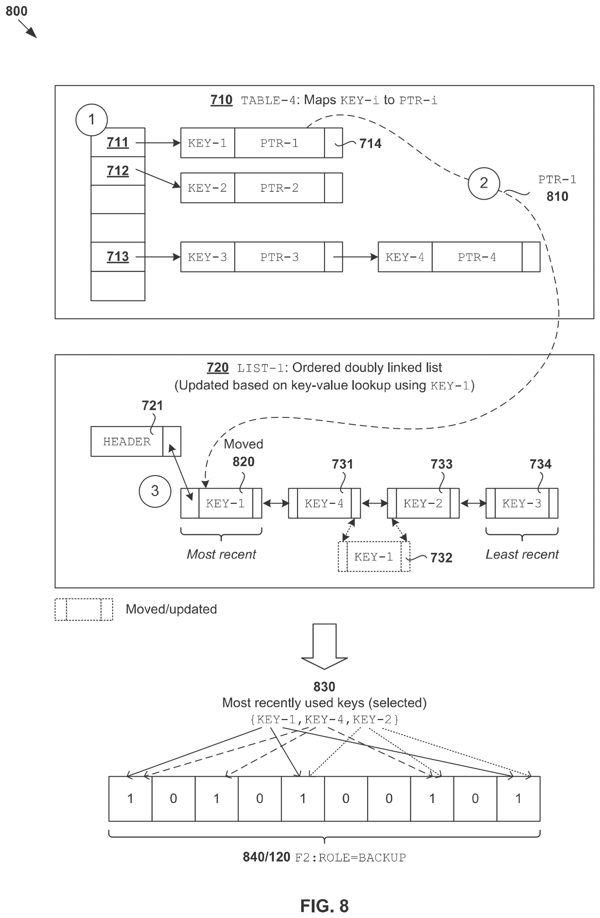

Some example data structures for storing updated recency attribute information are shown in FIG. 8, which is a schematic diagram illustrating example updated lookup attribute information (see 800) compared to the second example in FIG. 7. In the example in FIG. 8, consider a key-value lookup based on KEY-*i* = KEY-1. First, KEY-1 may be hashed to a first entry (see 711) in TABLE-4 710 to identify PTR-1 associated with KEY-1. See 810 in FIG. 8.

Using a memory location identified by PTR-1, a record (see 732 in FIG. 8) associated with KEY-1 may be identified and accessed from LIST-1 720. Next, the record associated with KEY-1 may be moved from (a) its original position between KEY-4 and KEY-2 to (b) a new position at the front of the list, right after header 721. After the update, LIST-2 720 indicates KEY-1 to be the most recently used key, followed by KEY-4, KEY-2 and KEY-3. See 820 in FIG. 8.

### (c) Recency-based key selection

Referring to FIG. 4 again, at 440-450, in response to determination to reset F1 110 and trigger a switchover, computer system 101 may select S2 = {KEY-*j*}. Block 440 may involve determining whether a time-based condition and/or a non-time-based condition is satisfied. A time-based condition may be satisfied when a certain amount of time has elapsed since the last filter reset. A non-time-based condition may be satisfied when a performance metric associated with key-value lookup handling meets or exceeds a configurable threshold.

At 451 in FIG. 4, based on updated recency attribute information 710-720 in FIG. 8, computer system 101 may perform a linear search with O(1) time complexity to select the most recently used keys from LIST-1 720. In the example in FIG. 8, the list of keys ordered from the most recently used to the least recently used is {KEY-1, KEY-4, KEY-2, KEY-3}. In practice, any suitable selection criterion or criteria may be applied to select KEY-*j* for S2 170. In one example, a configurable number or percentage of keys may be selected for S2 170based on the desired memory usage, starting from the most recently used (i.e., head) to the least recently used (i.e., tail). This reduces the likelihood of selecting the least recently used keys to reduce cache waste. In the example in FIG. 6, the selected keys may be S2 = {KEY-1, KEY-4, KEY-2}, i.e., a set of the most recently used keys during first time period 105. See 830 in FIG. 8.

### (d) Recency-based probabilistic filter configuration

At 460 in FIG. 4, computer system 101 may configure F2 120 to represent S2 = {KEY-j}. For example, at 461, each KEY-*j* may be encoded in F2 120 using *K* hash functions to calculate *K* hash values, which identify *K* bit indices or locations in F2 120. For example, using *M* = 10 bits for F2 120 and *K* = 3 hash functions, the bits at indices [0, 4, 9] are set to 1 to encode KEY-1. For KEY-4, the bits at indices [0, 2, 7] are set to 1. To encode KEY-2, the bits at indices [4, 7, 9] may be set to 1. This results in F2 = [1, 0, 1, 0, 1, 0, 0, 1, 0, 1]. See 840 in FIG. 8.

At 470 in FIG. 4, computer system 101 may switch the roles by assigning F2 120/840 as the ACTIVE filter and F1 110 as the BACKUP filter. During second time period 106, F2 120/840 may be stored in first storage 103 (e.g., cache memory) for handling second key-value lookups. F1 110 may be reset (i.e., emptied) and stored in second storage 104 (e.g., main memory). See also 180-195 in FIG. 1.

Although exemplified using S2 = {KEY-1, KEY-2, KEY-4} at 830-840 in FIG. 8, it should be noted that a new key (e.g., KEY-6), which is not a member of S1 130, may be selected either additionally or alternatively. In such cases, recency attribute information 710-720 may track and identify KEY-6 as one of the most recently used keys during first time period 105. This way, S2 170 may be configured to include new keys that have been more recently used or accessed during first time period 105 compared to the existing keys in S1 130, thereby filtering out less relevant keys based on recency.

The examples in FIGs. 3-4 may be repeated as key-value lookup handling is performed over multiple time periods. For example, during second time period 106, blocks 410-460 in FIG. 4 may be repeated to generate/update lookup attribute information associated with second key-value lookups 190 to track the most frequently/recently used keys during second time period 106. The updated lookup attribute information may be used to select a third set of keys for a subsequent, third time period. The example data structures in FIGs. 5-8 may be implemented to reduce cache waste while keeping a deterministic choice of the most frequently/recently used keys.

### Resetting lookup attribute information

At 480-485 in FIG. 4, in response to determination to reset lookup attribute information 150, computer system 101 may perform the reset by removing all or some records from data structures 510-530 in FIGs. 5-6 and/or data structures 710-720 in FIGs. 7-8. The determination at block 480 may be based on any suitable condition(s), such as whether a time-based condition and/or a non-time-based condition is satisfied. A time-based condition may be satisfied when a certain amount of time has elapsed since the last reset. For example, lookup attribute information 150 may be reset at the end of each time period, or after several time periods have elapsed. A non-time-based condition may be satisfied when, for example, a performance metric associated with key-value lookup handling meets or exceeds a configurable threshold.

### Time complexity

According to examples of the present disclosure, the linear search at block 450 in FIG. 4 may be performed with O(1) time complexity. The removal and addition operations in a doubly linked list generally have a time complexity of O(1) because they involve adjusting pointers. When a key record is removed from one position/list and moved to a new position/list, only a constant number of pointer adjustments are required. This efficiency may be achieved because each record in a doubly linked list maintains pointers to both its previous and next records.

In the example in FIG. 6, TABLE-2 520 is used to store memory pointers such that a key record associated with KEY-1 may be identified in TABLE-3 530 with a time complexity of O(1) instead of O(n). Once identified, the key record associated with KEY-1 may be (a) removed from a first doubly linked list (see 660 in FIG. 6) associated with a previous frequency counter value = 11 and (b) added to a second doubly linked list (see 670 in FIG. 6) associated with the new frequency counter value = 12. Further, KEY-1 may be added to the front of the second doubly linked list (see 650 in FIG. 6) to track KEY-1 as the most recently used key for the new frequency counter value. This way, during key selection, the least frequently used key(s) may be filtered out to reduce cache waste.

Similarly, in the example in FIG. 8, TABLE-4 710 may be configured to store memory pointers for keys. Particularly, using PTR-1 retrieved from TABLE-4 710, a corresponding key record associated with KEY-1 may be identified from LIST- 1720 with O(1) time complexity. The key record may then be moved to the front of LIST-1 720 to indicate that KEY-1 is currently the most recently used key. This way, during recency-based key selection, the least recently used key(s) may be filtered out to reduce cache waste. Having O(1) time complexity for a linear search on a doubly linked list enhances efficiency, as it allows constant-time access regardless of the number of records stored on the doubly linked list. This means search operations may be performed quickly and consistently, even as the number of records and corresponding keys grows.

Although described using hash tables and doubly linked lists in FIGs. 5-8, any additional and/or alternative data structures that facilitate O(1) time complexity and O(n) memory complexity may be used. For example, features of the most frequently used keys and/or the most recently used keys may be tracked using any additional and/or alternative data structures, such as using Cuckoo hashing, etc. In practice, Cuckoo hashing is a hashing technique that resolves collisions by using multiple hash functions and relocating existing keys to new positions when collisions occur. Each key can be placed in one of several possible locations defined by different hash functions, and if a position is already occupied, the existing key is moved to its alternate location, potentially displacing another key. This process continues until every key is successfully placed without collisions, ensuring efficient and predictable O(1) lookup time.

### Example use cases

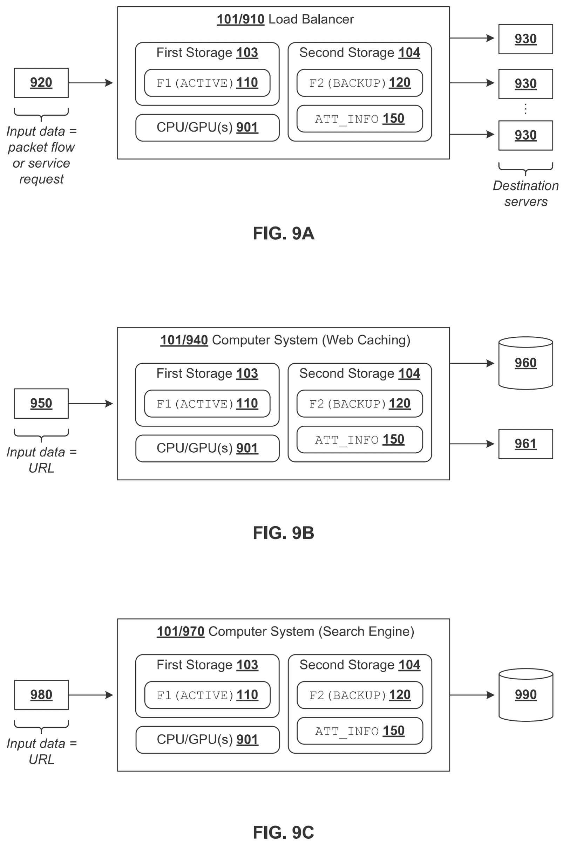

In practice, any suitable computer system 101 may be configured to perform key-value lookup handling with attribute-based probabilistic filter configuration according to examples of the present disclosure. Some examples will be discussed using FIGs. 9A-C in relation to load balancing, web caching and search query handling. In each example, computer system 101 may include any suitable processor(s) and/or accelerator(s) 901 to implement examples of the disclosure. A processor or central processing unit (CPU) may refer to a component in a computer system that performs processing by executing computer-readable instructions or program code. An accelerator may refer to a specialized hardware component designed to perform computations more efficiently than a general-purpose processor. An accelerator may be a graphics processing units (GPU) optimized for parallel processing tasks, etc. In the following, various implementation details that have been described using FIGs. 1-8 are applicable and will not be repeated for brevity.

### (a) Load balancing

FIG. 9A is a schematic diagram illustrating a first example computer system to perform key-value handling with attribute-based probabilistic filter configuration. In this example, computer system 101 may be a network element configured to be a load balancer (see 910) to distribute packet flows or service requests (see 920) that are addressed to a common network address (e.g., virtual IP address) among a pool of destination servers (see 930). Each destination server may represent any suitable backend server for processing the packet flows or service requests, such as an application server, a database server, a web server, etc. Depending on the desired implementation, the server pool may be deployed to provide software as a service (SaaS) to facilitate the delivery of cloud-native software application(s) over the Internet as a service, etc.

Load balancer 910 may be configured to provide an entry point or gateway for accessing destination servers 930. Each packet flow or service request may originate from a client system, which may be a physical machine, virtualized computing instance, etc. The client system may be a source endpoint associated with a packet flow. For example, in a data center environment, load balancer 910 may act as a gateway and perform north-south traffic distribution to steer traffic from client systems (not shown for simplicity) towards destination servers 930. Alternatively or additionally, load balancer 910 may perform east-west traffic distribution to steer traffic from client systems towards destination servers 930 located within the same data center.

Using examples of the present disclosure, load balancer 910 may maintain F1 110 (i.e., ACTIVE filter) that represents S1 130 for handling first key-value lookups during a first time period. Based on a key extracted from input data in the form of a packet flow or service request, load balancer 910 may perform a key-value lookup and update lookup attribute information 150 associated with the key. For example, frequency attribute information associated with the key may be updated according to the examples in FIGs. 5-6. In another example, recency attribute information associated with the key may be updated according to the examples in FIGs. 7-8. Prior to a switchover, load balancer 910 may select S2 170 based on lookup attribute information 150 and configure F2 120 (i.e., BACKUP filter) to represent S2 170 for handling second key-value lookups during a second time period.

### (b) Web caching

FIG. 9B is a schematic diagram illustrating a second example computer system to perform key-value handling with attribute-based probabilistic filter configuration. In this example, computer system 101 may be a server (see 940) that is configured to provide a web caching service and determine whether a web object or uniform resource locator (URL) is present in a cache in a content delivery network environment. In this case, computer system 101 may maintain F1 110 (i.e., ACTIVE filter) that represents S1 130 for handling first key-value lookups during a first time period. Based on a key that is generated based on the URL (see 950 in FIG. 9B), computer system 101 may determine whether the key is a member of S1 130, thereby improving the speed and efficiency of content delivery.

In response to determination that the query key is an approximate member, computer system 101 may retrieve content (i.e., value) associated with the key from any suitable datastore (see 960 in FIG. 9B). Otherwise (not a member), the content may be directly fetched from the source associated with the URL (see 961 in FIG. 9B). Using examples of the present disclosure, computer system 101 may update lookup attribute information 150 associated with the key, select S2 170 based on lookup attribute information 150 and configure F2 120 (i.e., BACKUP filter) to represent S2 170 for handling second key-value lookups during a second time period. This allows the tracking of the most frequently used and/or most recently used keys and associated URLs to improve efficiency.

### (c) Search engine

FIG. 9C is a schematic diagram illustrating a third example computer system to perform key-value handling with attribute-based probabilistic filter configuration. In this example, computer system 101 may be configured to provide a search engine service (see 970). In this case, probabilistic filters may be used to represent keys in the form of search terms. When a document is indexed for searching, the search terms may be added to F1 110. When a user submits a search query based on a search term (see 980 in FIG. 9C), computer system 101 may extract a query key and determine whether the key is a member. If yes, computer system 101 may determine that the search term is likely to be present in the indexed documents. In this case, computer system 101 may retrieve the relevant document(s) from a datastore (see 990 in FIG. 9C) to satisfy the search query. This reduces the need for exhaustive searches and speeds up query processing.

Using examples of the present disclosure, computer system 101 may update lookup attribute information 150 associated with the key, select S2 170 based on lookup attribute information 150 and configure F2 120 (i.e., BACKUP filter) to represent S2 170 for handling second key-value lookups during a second time period. This allows the tracking of the most frequently used and/or most recently used keys and search terms to improve efficiency. This is useful for search engines that need to handle large volumes of data and queries.

### (d) Others

Any additional and/or alternative use cases may be envisaged. For example, in database query optimization systems, a distributed database system may determine whether a record (key) is present in a particular shard or partition using probabilistic filters. In network security systems, a firewall or intrusion detection system may determine whether a key associated with an IP address (key) is part of a blacklist or whitelist using probabilistic filters. In distributed cache systems, a distributed cache system may determine whether a key is present in any of a plurality of cache nodes using probabilistic filters. In email spam filtering systems, an email system may determine whether an email address (key) is part of a list of spammers using probabilistic filters. The examples described herein illustrate how probabilistic filters may be leveraged to enhance the performance and efficiency of key-value lookup operations across various applications. Attribute-based probabilistic filter configuration may be performed to configure probabilistic filters to represent the most relevant keys to improve the performance of key-value lookup handling.

### Software-defined networking (SDN) environment

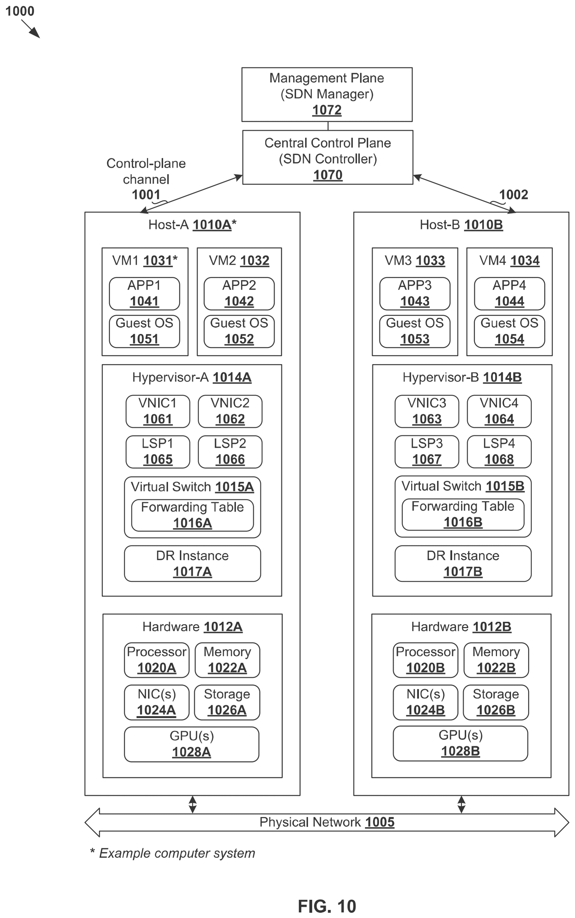

Computer system 101 may be deployed in any suitable network environment, such as a software-defined networking (SDN) environment, etc. An example will be described using FIG. 10, which is a schematic diagram illustrating an example SDN environment (see 1000) in which a computer system may be deployed to perform key-value lookup handling. In one example, computer system 101 may be a host or a virtualized computing instance (e.g., virtual machine or container) supported by the host. In another example, computer system 101 may be a physical or virtual network element, such as switch, router, gateway, load balancer, etc.

In more detail, SDN environment 1000 may be a public or private cloud-based network environment that includes any suitable number of hosts, such as host-A 1010A and host 1010B. Host 1010A/1010B may include suitable hardware 1012A/1012B and virtualization software (e.g., hypervisor-A 1014A, hypervisor-B 1014B) to support various VMs. For example, host-A 1010A may support VM1 1031 and VM2 1032, while VM3 1033 and VM4 1034 are supported by host-B 1010B. Hardware 1012A/1012B includes suitable physical components, such as processor(s) or accelerator(s) 1020A/1020B; memory 1022A/1022B; physical network interface controllers (PNICs) 1024A/1024B; storage disk(s) 1026A/1026B; GPUs 1028A/1028B etc. The phrase "an element is supported by a computer system" may refer generally to the computer system providing any suitable hardware and/or software component(s) to implement various operations performed by the element.

Hypervisor 1014A/1014B maintains a mapping between underlying hardware 1012A/1012B and virtual resources allocated to respective VMs. Virtual resources are allocated to respective VMs 1031-1034 to support a guest operating system and application(s); see 1041-1044, 1051-1054. For example, the virtual resources may include virtual CPU, guest physical memory, virtual disk, virtual network interface controller (VNIC), etc. Hardware resources may be emulated using virtual machine monitors (VMMs). For example in FIG. 10, VNICs 1061-1064 are virtual network adapters for VMs 1031-1034, respectively, and are emulated by corresponding VMMs (not shown) instantiated by their respective hypervisor at respective host-A 1010A and host-B 1010B. The VMMs may be considered as part of respective VMs, or alternatively, separated from the VMs. Although one-to-one relationships are shown, one VM may be associated with multiple VNICs (each VNIC having its own network address).

Although examples of the present disclosure refer to VMs, it should be understood that a "virtual machine" running on a host is merely one example of a "virtualized computing instance" or "workload." A virtualized computing instance may represent an addressable data compute node (DCN) or isolated user space instance. In practice, any suitable technology may be used to provide isolated user space instances, not just hardware virtualization. Other virtualized computing instances may include containers (e.g., running within a VM or on top of a host operating system without the need for a hypervisor or separate operating system or implemented as an operating system level virtualization), virtual private servers, client computers, etc. Such container technology is available from, among others, Docker, Inc. The VMs may also be complete computational environments, containing virtual equivalents of the hardware and software components of a physical computing system. Depending on the desired implementation, examples of the present disclosure may also leverage any suitable serverless computing technology. One example is function-as-a-service (FaaS), which allows developers to execute code (e.g., in response to events) without having to manage the underlying cloud infrastructure. Another example is serverless GPU (also known as accelerator-as-a-service), which allows developers to access powerful GPU resources for their applications.

The term "hypervisor" may refer generally to a software layer or component that supports the execution of multiple virtualized computing instances, including system-level software in guest VMs that supports namespace containers such as Docker, etc. Hypervisors 1014A-B may each implement any suitable virtualization technology, such as VMware ESX^{®} or ESXi^{™} (available from VMware LLC), Kernel-based Virtual Machine (KVM), etc. The term "packet" may refer generally to a group of bits that can be transported together, and may be in another form, such as "frame," "message," "segment," etc. The term "traffic" or "flow" may refer generally to multiple packets. The term "layer-2" may refer generally to a link layer or media access control (MAC) layer; "layer-3" a network or Internet Protocol (IP) layer; and "layer-4" a transport layer (e.g., using Transmission Control Protocol (TCP), User Datagram Protocol (UDP), etc.), in the Open System Interconnection (OSI) model, although the concepts described herein may be used with other networking models.

SDN controller 1070 and SDN manager 1072 are example network management entities in SDN environment 100. One example of an SDN controller is the NSX controller component of VMware NSX^{®} (available from VMware LLC) that operates on a central control plane. SDN controller 1070 may be a member of a controller cluster (not shown for simplicity) that is configurable using SDN manager 1072. Network management entity 1070/1072 may be implemented using physical machine(s), VM(s), or both. To send or receive control information, a local control plane (LCP) agent (not shown) on host 1010A/1010B may interact with SDN controller 1070 via control-plane channel 1001/1002.

Through virtualization of networking services in SDN environment 100, logical networks (also referred to as overlay networks or logical overlay networks) may be provisioned, changed, stored, deleted, and restored programmatically without having to reconfigure the underlying physical hardware architecture. Hypervisor 1014A/1014B implements virtual switch 1015A/1015B and logical distributed router (DR) instance 1017A/1017B to handle egress packets from, and ingress packets to, VMs 1031-1034. In SDN environment 100, logical switches and logical DRs may be implemented in a distributed manner and can span multiple hosts.

For example, a logical switch (LS) may be deployed to provide logical layer-10 connectivity (i.e., an overlay network) to VMs 1031-1034. A logical switch may be implemented collectively by virtual switches 1015A-B and represented internally using forwarding tables 1016A-B at respective virtual switches 1015A-B. Forwarding tables 1016A-B may each include entries that collectively implement the respective logical switches. Further, logical DRs that provide logical layer-3 connectivity may be implemented collectively by DR instances 1017A-B and represented internally using routing tables (not shown) at respective DR instances 1017A-B. Each routing table may include entries that collectively implement the respective logical DRs.

Packets may be received from, or sent to, each VM via an associated logical port. For example, logical switch ports 1065-1068 (labelled "LSP1" to "LSP4") are associated with respective VMs 1031-1034. Here, the term "logical port" or "logical switch port" may refer generally to a port on a logical switch to which a virtualized computing instance is connected. A "logical switch" may refer generally to a software-defined networking (SDN) construct that is collectively implemented by virtual switches 1015A-B, whereas a "virtual switch" may refer generally to a software switch or software implementation of a physical switch. In practice, there is usually a one-to-one mapping between a logical port on a logical switch and a virtual port on virtual switch 1015A/1015B. However, the mapping may change in some scenarios, such as when the logical port is mapped to a different virtual port on a different virtual switch after migration of the corresponding virtualized computing instance (e.g., when the source host and destination host do not have a distributed virtual switch spanning them).

A logical overlay network may be formed using any suitable tunneling protocol, such as Virtual eXtensible Local Area Network (VXLAN), Stateless Transport Tunneling (STT), Generic Network Virtualization Encapsulation (GENEVE), Generic Routing Encapsulation (GRE), etc. For example, VXLAN is a layer-2 overlay scheme on a layer-3 network that uses tunnel encapsulation to extend layer-2 segments across multiple hosts which may reside on different physical networks. Hypervisor 1014A/1014B may implement virtual tunnel endpoint (VTEP) 1019A/1019B to encapsulate and decapsulate packets with an outer header (also known as a tunnel header) identifying the relevant logical overlay network (e.g., VNI). Hosts 1010A-B may maintain data-plane connectivity with each other via physical network 1005 to facilitate east-west communication among VMs 1031-1034.

### Computer system

The above examples may be implemented by hardware (including hardware logic circuitry), software or firmware or a combination thereof. The above examples may be implemented by any suitable computing device, computer system, etc. The computer system may include processor(s), memory unit(s) and physical NIC(s) that may communicate with each other via a communication bus, etc. The computer system may include a non-transitory computer-readable medium having stored thereon instructions or program code that, when executed by the processor, cause the processor to perform processes described herein with reference to the drawings.

The techniques introduced may be implemented in special-purpose hardwired circuitry, in software and/or firmware in conjunction with programmable circuitry, or any combination thereof. Special-purpose hardwired circuitry may be in the form of, for example, one or more application-specific integrated circuits (ASICs), programmable logic devices (PLDs), field-programmable gate arrays (FPGAs), etc. The term 'processor' is to be interpreted broadly to include a processing unit, ASIC, logic unit, or programmable gate array etc. The term "accelerator" may refer generally to any hardware or other computation processing unit (e.g., high-performance computation processing unit, etc.) for accelerating computational tasks, such as GPUs, tensor processing units (TPUs), neural processing units (NPUs), etc. Any alternative processor architecture(s) may be used, such as hybrid architecture (e.g., XPU) that is designed to handle a variety of workloads by combining different types of processing units, etc.

The foregoing detailed description has set forth various embodiments of the devices and/or processes via the use of block diagrams, flowcharts, and/or examples. Insofar as such block diagrams, flowcharts, and/or examples contain one or more functions and/or operations, it will be understood by those within the art that each function and/or operation within such block diagrams, flowcharts, or examples may be implemented, individually and/or collectively, by a wide range of hardware, software, firmware, or any combination thereof.

Those skilled in the art will recognize that some aspects of the embodiments disclosed herein, in whole or in part, may be equivalently implemented in integrated circuits, as one or more computer programs running on one or more computers (e.g., as one or more programs running on one or more computing systems), as one or more programs running on one or more processors (e.g., as one or more programs running on one or more microprocessors), as firmware, or as virtually any combination thereof, and that designing the circuitry and/or writing the code for the software and or firmware would be well within the skill of one of skilled in the art in light of this disclosure.

Software and/or to implement the techniques introduced here may be stored on a non-transitory computer-readable storage medium and may be executed by one or more general-purpose or special-purpose programmable microprocessors. A "computer-readable storage medium", as the term is used herein, includes any mechanism that provides (i.e., stores and/or transmits) information in a form accessible by a machine (e.g., a computer, network device, personal digital assistant (PDA), mobile device, manufacturing tool, any device with a set of one or more processors, etc.). A computer-readable storage medium may include recordable/non recordable media (e.g., read-only memory (ROM), random access memory (RAM), magnetic disk or optical storage media, flash memory devices, etc.).

The drawings are only illustrations of an example, wherein the units or procedure shown in the drawings are not necessarily essential for implementing the present disclosure. Those skilled in the art will understand that the units in the device in the examples may be arranged in the device in the examples as described or may be alternatively located in one or more devices different from that in the examples. The units in the examples described may be combined into one module or further divided into a plurality of sub-units.

## Claims

1. A method for a computer system to perform attribute-based probabilistic filter configuration for key-value lookup handling, wherein the method comprises:
maintaining, by the computer system, a first probabilistic filter that represents a first set of keys for handling first key-value lookups during a first time period;
generating, by the computer system, lookup attribute information to track one or more attributes associated with the first key-value lookups during the first time period;
selecting, by the computer system, a second set of keys based on the lookup attribute information; and
configuring, by the computer system, the first probabilistic filter or a second probabilistic filter to represent the second set of keys for handling second key-value lookups during a second time period that occurs after the first time period.

2. The method of claim 1, wherein
generating the lookup attribute information comprises:
generating, by the computer system, the lookup attribute information to track a frequency attribute.

3. The method of claim 2, wherein
generating the lookup attribute information comprises, in response to detecting a particular first key-value lookup based on a particular key:
updating, by the computer system, a key-to-frequency data structure to associate the particular key with an increased frequency counter value;
retrieving, by the computer system, a memory pointer associated with the particular key from a key-to-pointer data structure; and
based on the memory pointer, updating, by the computer system, a frequency-to-key data structure to associate the increased frequency counter value with the particular key, wherein the frequency-to-key data structure is updated to indicate the particular key to be the most recently used for the increased frequency counter value.

4. The method of claim 2 or 3, wherein
selecting the second set comprises:
based on the lookup attribute information that tracks the frequency attribute, performing, by the computer system, a search to select the second set of keys to include most frequently used keys during the first time period.

5. The method of any one of the claims 1 to 4, wherein
generating the lookup attribute information comprises:
generating, by the computer system, the lookup attribute information to track a recency attribute.

6. The method of claim 5, wherein
generating and storing the lookup attribute information comprises in response to detecting a particular first key-value lookup based on a particular key:
retrieving, by the computer system, a memory pointer associated with the particular key from a key-to-pointer data structure; and
based on the memory pointer, updating, by the computer system, a data structure that orders keys in the first set from most recently used to least recently used, wherein the data structure is updated to indicate that the particular key is the most recently used key.

7. The method of claim 5 or 6, wherein
selecting the second set comprises:
based on the lookup attribute information that tracks the recency attribute, performing, by the computer system, a search to select the second set of keys to include most recently used keys during the first time period.

8. A computer system, comprising:
a processor; and
a non-transitory computer-readable medium having stored thereon instructions that, when executed by the processor, cause the processor to perform a method as set forth in any one of the preceding method claims.

9. A non-transitory computer-readable storage medium that includes a set of instructions which, in response to execution by a processor of a computer system, cause the processor to perform a method as set forth in any one of the preceding method claims.
